# DEMANDE DE BREVET EUROPEEN

(11) **EP 4 518 289 A1**
(43) Date de publication de la demande: **05.03.2025**
(21) Numéro de dépôt: 24193799.4
(22) Date de dépôt: 09.08.2024
(51) Int. Cl.: H04L 67/02, H04L 67/564, H04L 67/568, H04L 67/5681

(54) **EXÉCUTION ACCÉLÉRÉE D'UNE APPLICATION WEB PAR UN TERMINAL DE LECTURE DE CONTENU AUDIO-VISUEL, AU TRAVERS D'UNE PASSERELLE**

(30) Priorité: 28.08.2023 FR 2309007
(71) Demandeur: Orange, 92130 Issy-les-Moulineaux (FR)
(72) Inventeur: RIVOALEN, Mathieu, 92326 CHATILLON CEDEX (FR); MARCHAND, Hervé, 92326 CHATILLON CEDEX (FR)
(74) Mandataire: Regimbeau

(57) **Abrégé**

Procédé pour l'exécution par un terminal (T) d'une application web (A) dont un ensemble de ressources associées est mémorisé sur un serveur web distant (S), ledit procédé comportant des étapes de :
- détection (S1) par une passerelle (P) d'une présence au sein dudit terminal d'un appel à ladite application web et identification dudit serveur web distant ;
- détermination (S2) d'une période temporelle correspondant à un trafic bas associé audit serveur web distant ;
- téléchargement (S3) d'au moins une partie dudit ensemble de ressources pendant ladite période par ladite passerelle.

## Description

### DOMAINE DE L'INVENTION

La présente invention concerne le domaine des applications pour les terminaux de lectures de flux de contenus de type audio-vidéo (ou audio-visuel). Elle s'applique particulièrement à des terminaux de type télévision ou clé TV.

De nombreuses applications déployés sur les terminaux sont des applications web, c'est-à-dire qui sont hébergées sur des serveurs web et accessibles grâce à un navigateur ou autre outil natif installé sur le terminal.

Les serveurs web sont typiquement distants et accessibles au travers d'un réseau de télécommunication tel qu'Internet.

Cette architecture permet aux propriétaires des applications de les modifier aisément, d'en modifier les contenus, sans avoir à télécharger une nouvelle version sur les terminaux.

Ces applications web permettent aux utilisateurs des terminaux d'accéder à différents services liés à des contenus audio-vidéos : par exemple, ces différentes applications permettent, chacune, d'accéder à des contenus diffusés par des prestataires distincts. On peut par exemple avoir des applications liées à des chaînes de télévision, à des radios, à des services de contenus à la demande (comme par exemple Netflix^{™}, Amazon Prime^{™}, Spotify^{™}, Youtube^{™}...).

Lorsque l'utilisateur allume son terminal, un logiciel embarqué gérant l'interface homme-machine va déclencher des requêtes vers les serveurs où sont hébergés les applications pour chaque application configurée sur le terminal.

Ces premières requêtes visent à au moins permettre l'affichage d'un premier contenu lié à chaque application : ce premier contenu peut n'être qu'une icône, mais dans certains cas, l'interface est configurée pour afficher un contenu dynamique lié à l'application.

Il s'ensuit que lors de l'allumage du terminal, celui-ci va solliciter les différents serveurs pour télécharger les contenus liés aux applications web configurées.

Or, l'allumage des terminaux de lecture de flux de contenu répond à des comportements sociaux. Ceux-ci peuvent être basés sur des habitudes générales comme par exemple l'allumage du téléviseur lorsqu'on arrive chez soi en fin de journée. Ils peuvent aussi être basés sur des événements majeurs comme la diffusion d'une compétition sportive, par exemple.

L'allumage d'un grand nombre de terminaux dans une courte fenêtre temporelle engendre un grand nombre de requêtes reçus par les serveurs, et leur engorgement.

En outre, la technologie web implique que plusieurs requêtes successives peuvent être nécessaires afin de récupérer l'ensemble des éléments permettant de produire le contenu requis pour une application : par exemple une première requête à un système de noms de domaine ou DNS (pour « Domain Name System » en anglais), une requête pour récupérer la page HTML principale, puis des requêtes pour récupérer les différents éléments référencés dans cette page HTML (images, code Javascript, etc.).

Les terminaux connectés au réseau de télécommunication via un réseau d'accès de type ADSL sont de surcroît pénalisés par le débit faible du lien montant. Le nombre important de requête (dans le sens montant, donc) vers des serveurs engorgés engendre une latence importante pour le lancement de l'application web.

Une solution apportée à cette problématique peut consister à surdimensionner les serveurs afin qu'ils puissent faire face aux points de requêtes. En dehors de ces périodes de pointe, les serveurs sont donc nécessairement sous-utilisés

Une telle solution souffre d'au moins deux inconvénients majeurs.

Tout d'abord, le nombre de terminaux déployés et le nombre d'applications configurées sur ces terminaux allant croissants, il est difficile de conserver un dimensionnement des serveurs en rapport avec la croissance des besoins.

Surtout, le surdimensionnement des serveurs est préjudiciable en termes de gestion énergétique globale. Une telle solution va donc clairement à l'encontre des politiques écologiques et de bonne gestion de l'énergie qui sont de plus en plus mises en oeuvre à travers le monde.

Il convient donc de trouver d'autres solutions permettant d'améliorer l'expérience des utilisateurs de terminaux lors de l'allumage de ceux-ci, tout en minimisant l'impact énergétique.

### RESUME DE L'INVENTION

À ces fins, il est proposé d'intervenir au niveau des passerelles qui permettent aux terminaux de se connecter via un réseau de télécommunication aux serveurs distants où sont hébergés les applications web.

Plus précisément, selon un premier aspect, la présente invention peut être mise en oeuvre par un procédé pour l'exécution par un terminal d'une application web dont un ensemble de ressources associées est mémorisé sur un serveur web distant, ledit procédé comportant des étapes de :
- détection par une passerelle d'une présence au sein dudit terminal d'un appel à ladite application web et identification dudit serveur web distant ;
- détermination d'une période temporelle correspondant à un trafic bas associé audit serveur web distant ;
- téléchargement d'au moins une partie dudit ensemble de ressources pendant ladite période par ladite passerelle ;

Cette transmission de la ressource vers le terminal s'effectue sans solliciter le serveur web distant. Ainsi, comme il sera vu plus loin, le coût du téléchargement des ressources est déporté vers des périodes où la charge du serveur est à la fois moindre et moins impactante pour l'exécution à l'application web. Cet accès s'en trouve ainsi accéléré, sans nécessité de surdimensionnement du serveur ou des autres équipements.

Suivant des modes de réalisation préférés, l'invention comprend une ou plusieurs des caractéristiques suivantes qui peuvent être utilisées séparément ou en combinaison partielle entre elles ou en combinaison totale entre elles :
- ledit procédé comprend en outre une étape d'interception par ladite passerelle d'une requête dudit terminal vers une ressource parmi ladite au moins une partie dudit ensemble de ressources, et transmission de ladite ressource correspondant à ladite requête vers ledit terminal.
- ladite au moins une partie dudit ensemble de ressources est mémorisée sur un serveur web interne de ladite passerelle. Cela permet une meilleure gestion des ressources au sein de la passerelle, en permettant de gérer les ressources de façon protocolairement similaire selon si elle est disponible sur un serveur web distant ou sur un serveur web local (protocole HTTP...).
- ladite au moins une partie dudit ensemble de ressources est constituées de ressources statiques. Comme il sera vu plus loin, on peut ainsi ne télécharger que les ressources peu susceptibles de modifications à court terme mais continuer à télécharger les ressources plus dynamiques afin de permettre un bon compromis entre l'accélération de l'exécution et la prise en compte du caractère dynamique des applications web.
- ledit trafic correspond à une charge dudit serveur web distant.
- ladite interception fonctionne en collaboration avec un containeur applicatif déployé sur ladite passerelle afin d'isoler le traitement desdites étapes au sein de ladite passerelle. On obtient ainsi une meilleure isolation du mécanisme proposé avec les autres fonctionnalités de la passerelle.
- ladite détection comprend une analyse de requêtes précédentes dudit terminal vers un système de noms de domaine en fonction d'une base de données d'applications.
- interception comprend une analyse d'une première requête dudit terminal destiné audit système de noms de domaine, pour déterminer si ladite première requête correspond à ladite application web et, en ce cas, une mémorisation d'une adresse IP correspondant à ladite première requête, et détection de ladite requête dudit terminal vers ladite ressource à partir de ladite adresse IP.

Ces mécanismes permettent à la passerelle d'apprendre par elle-même les applications web auxquelles les terminaux souhaitent accéder sans dépendre des fonctionnalités de ceux-ci, telles que par exemple des mécanismes d'auto-apprentissage.

Un autre aspect de l'invention concerne une passerelle pour l'exécution par un terminal d'une application web dont un ensemble de ressources associés est mémorisé sur un serveur web distant, ladite passerelle comportant des moyens de traitement adaptés pour :
- détecter une présence au sein dudit terminal d'un appel à ladite application web et pour identifier ledit serveur web distant ;
- déterminer une période temporelle correspondant à un trafic bas associé audit serveur web distant ;
- télécharger au moins une partie dudit ensemble de ressources pendant ladite période par ladite passerelle ;

Suivant des modes de réalisation préférés, les moyens de traitement peuvent être en outre adaptés pour intercepter une requête dudit terminal vers une ressource parmi ladite au moins une partie dudit ensemble de ressources, et transmettre ladite ressource correspondant à ladite requête vers ledit terminal. La passerelle peut également comprendre une ou plusieurs des caractéristiques précédemment citées, qui peuvent être utilisées séparément ou en combinaison partielle entre elles ou en combinaison totale entre elles

Un autre aspect de l'invention concerne un programme d'ordinateur comprenant des instructions de code qui, lorsqu'il est exécuté par un processeur d'une passerelle, réalise les étapes du procédé tel que précédemment décrit.

Un autre aspect de l'invention concerne un support de données sur lequel a été mémorisé au moins une série d'instructions de code de programme pour l'exécution d'un procédé tel que précédemment décrit.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES FIGURES

Les dessins annexés illustrent l'invention :
- la figure 1 illustre un réseau de télécommunication permettant la mise en oeuvre d'un procédé selon des modes de réalisation de l'invention ;
- la figure 2 schématise une architecture fonctionnelle d'une passerelle selon des modes de réalisation de l'invention ;
- la figure 3 illustre un chronogramme illustrant un procédé selon une mise en oeuvre de l'invention ;
- la figure 4 illustre un exemple simplifié de récupération des ressources par le terminal selon un mode de réalisation ;
- la figure 5 représente un chronogramme illustrant un mode de réalisation particulier d'une étape du procédé ;
- la figure 6 illustre une architecture logicielle fonctionnelle d'une passerelle selon un mode de réalisation.

### DESCRIPTION DETAILLEE DE MODES DE REALISATION DE L'INVENTION

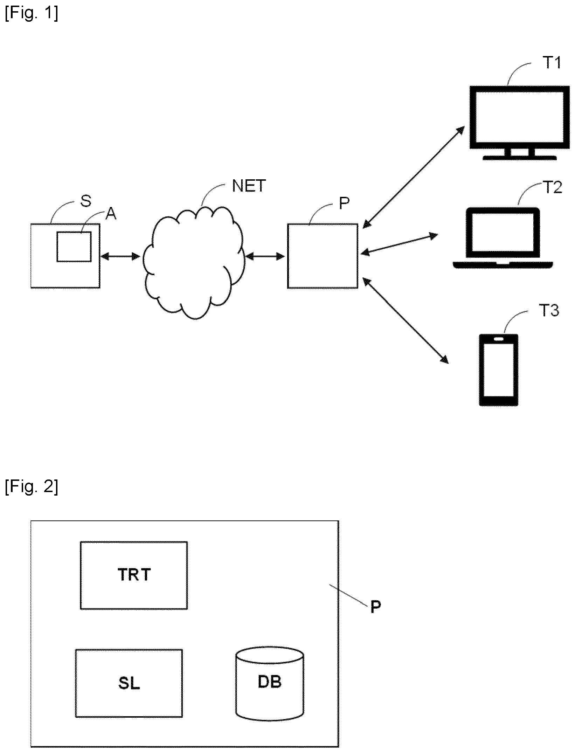

La figure 1 illustre un réseau de télécommunication, NET, permettant à une pluralité de terminaux ou dispositif de lecture de contenus audio-visuels T1, T2, T3 d'accéder et d'ainsi exécuter une application web A hébergé sur un serveur S distant.

Ces terminaux ou dispositifs de lecture peuvent être de différents types, tels que notamment un terminal mobile, un téléviseur connecté, un ordinateur, une clé TV, etc.

Le terminal mobile peut typiquement être un téléphone intelligent de type « smartphone » ou une tablette numérique, adapté pour recevoir des flux multimédias et à les produire sur une interface du terminal ou connecté audit terminal.

Un téléviseur peut être nativement connecté ou l'être par le truchement d'un dispositif associé tel que par exemple une clé HDMI connecté au téléviseur.

Une télévision connectée ou télévision intelligente (pour « smart TV » en anglais) est un téléviseur raccordé, directement ou indirectement, à Internet afin de fournir un ensemble de services aux téléspectateurs, dont l'accès à des applications web.

Comme évoqué précédemment, ces applications web permettent aux utilisateurs d'accéder à différents services liés à des contenus audio-vidéos : par exemple, ces différentes applications permettent d'accéder à des contenus diffusés par différents prestataires : on peut par exemple avoir des applications liées à des chaînes de télévision, à des radios, à des services de contenus à la demande (comme par exemple Netflix^{™}, Amazon Prime^{™}, Spotify^{™}, YouTube^{™}...).

Des dispositifs externes, ou « clés TV », peuvent se connecter à des télévisions non connectées afin de leur permettre d'obtenir des fonctionnalités identiques ou similaires à des télévisions connectées.

Un exemple de dispositif externe, ou clé TV, communiquant avec un téléviseur TV peut être Chromecast^{™}. Le Chromecast est un appareil lecteur de flux multimédias (passerelle multimédia) en temps réel développé et commercialisé par Google. L'appareil se branche sur le port HDMI d'un téléviseur et communique, par connexion Wi-Fi, avec un autre appareil connecté à Internet (ordinateur, smartphone, tablette...), afin d'afficher sur le téléviseur le contenu multimédia reçu depuis une application compatible avec la technologie Google Cast, depuis le navigateur Google Chrome présent sur un ordinateur, ou depuis certains appareils Android.

Les télévisions connectées et les clés TV partagent la caractéristique d'être statistiquement allumés dans des plages horaires similaires pour un grand nombre de personnes.

Ces plages horaires peuvent par exemple correspondre aux rythmes de travail majoritaires de la population. Ainsi, statistiquement et en fonction des localisations (pays, régions, villes...), la population arrivent chez elle en fin de journée dans une fenêtre temporelle relativement courte, et allument sa télévision dans une fenêtre temporelle encore plus courte.

Également, des événements spéciaux peuvent provoquer l'allumage des télévisions et clés TV dans des fenêtres temporelles également réduites : par exemple avant le début d'un événement sportif majeur (match de football important, compétition olympique populaire, etc.), ou autre.

Toutefois, le procédé décrit est également susceptible de s'appliquer à d'autres types de terminaux, y compris des téléphones ou terminaux de communication de type « smartphone », des tablettes numériques, des ordinateurs, etc.

Les terminaux sont adaptés pour recevoir des flux de données correspondant à des contenus sélectionnés par les utilisateurs. Ces contenus peuvent être associés à des applications web : par exemple, un terminal va recevoir un flux de données d'un contenu sélectionné à travers une application web correspondant à une chaîne ou service de contenu à la demande donné.

Ces flux de données peuvent typiquement être des flux multimédias. Ceux-ci comprennent typiquement des flux (ou contenus) vidéo ou audio-vidéo. Il peut également s'agir de flux audio (musique, émissions radio...), ou de contenus interactifs (y compris jeux). Il peut s'agir de contenu à la demande ou de contenu « en direct » ou « live ». Ce mode de transmission peut être un mode de transmission de type « IPTV » (sigle de « Internet Protocol Télévision » en anglais), mais d'autres modes de transmission sont bien évidemment envisageables.

Typiquement, les terminaux peuvent se connecter au réseau public (Internet...) via une passerelle P.

Cette passerelle est typiquement une passerelle domestique, qui est un équipement informatique servant d'interface entre Internet (via un réseau d'accès) et le réseau domestique. Ce type de passerelle est également appelé « box internet ».

Elle est prévue pour assurer les transmissions des données entre les deux réseaux en effectuant notamment les conversions protocolaires adéquats. Elle propose typiquement des fonctionnalités supplémentaires comme celles d'un routeur permettant aux différents terminaux de constituer un réseau local domestique (généralement Wi-Fi), un pare-feu (ou « firewall » en anglais), etc.

Les pages Wikipédia correspondantes, par exemple, fournissent des compléments d'informations sur ces passerelles :
https://fr.wikipedia.org/wiki/Box_Internet
https://en.wikipedia.org/wiki/Residential_gateway

Un exemple de passerelle P est la Livebox^{™} de la société Orange.

La figure 2 schématise une architecture fonctionnelle haut-niveau d'une passerelle selon des modes de réalisation.

Cette passerelle P comprend des moyens de traitement, TRT, adaptés pour mettre en oeuvre le procédé qui va été décrit ci-dessous, selon ses différents modes de réalisation et ses options possibles. Ces moyens de traitement comprennent, classiquement, au moins un microprocesseur, une mémoire prévue pour mémoriser un programme informatique comportant des instructions mettant en oeuvre ce procédé lorsqu'il est exécuté par l'au moins un microprocesseur. Les moyens de traitement TRT peuvent également comporter des circuits électroniques et d'autres mémoires adaptés pour fonctionner en collaboration avec l'au moins un microprocesseur.

La passerelle peut également comporter un serveur web local, SL, une base de données DB, selon différentes options de mise en oeuvre.

La passerelle peut également comporter différents équipements et fonctionnalités non directement liés au procédé proposé et qui ne seront donc pas décrits.

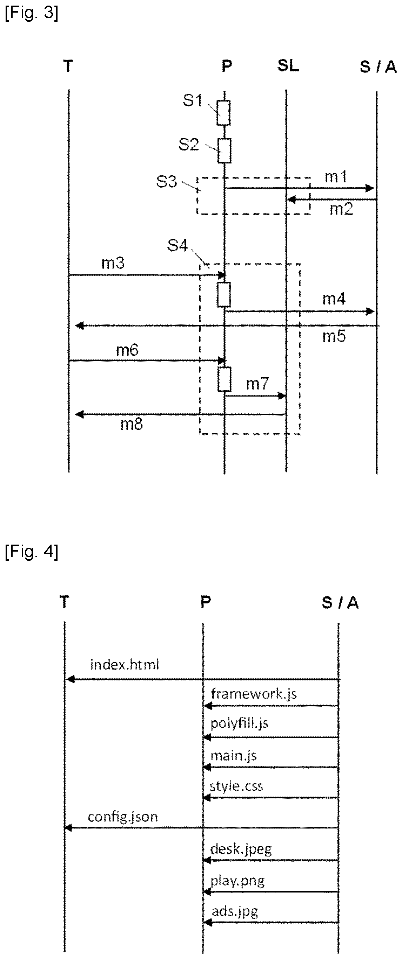

La figure 3 illustre, sous forme d'un chronogramme, un mode de réalisation d'un procédé proposé.

Ce procédé vise à l'exécution par un terminal (de lecture de contenu) T d'une application web A situé sur un serveur distant.

Cette application web est associée à un ensemble de ressources mémorisées sur un serveur web distant, typiquement celui qui héberge l'application web. Dans le mode de réalisation illustré, on suppose que les ressources sont colocalisées avec l'application A sur le serveur S, sans restriction de la généralité du procédé.

Le procédé va être décrit pour un terminal qui déclenche l'exécution d'une application web. Toutefois, le procédé est généralisable à une pluralité de terminaux et pour un accès à une pluralité d'applications web. En effet, les mêmes étapes peuvent être mises en oeuvre pour chaque exécution par un terminal (parmi, éventuellement, une pluralité) d'une application web (parmi éventuellement une pluralité).

Le procédé comprend une première étape de détection, S1, par la passerelle P, de la présence, au sein du terminal T, d'un appel à l'application web A et d'identification du serveur web distant hébergeant l'application web A.

Cette détection peut être mise en oeuvre selon différents mécanismes.

Selon un mode de réalisation, la détection comprend une analyse de requêtes précédentes du terminal T vers un système de noms de domaine en fonction d'une base de données d'applications.

Un système de noms de domaine, ou DNS (pour « Domain Name System ») est un service informatique distribué qui associe les noms de domaine Internet avec leurs adresses IP ou d'autres types d'enregistrements.

Plus spécifiquement, le système de noms de domaine peut associer une partie de l'identifiant d'une application web à une adresse IP.

Par exemple une application web peut avoir pour identifiant www.monserveur.fr/monapplication, dans lequel « www. monserveur.fr » forme un nom de domaine et « monapplication » identifie l'application web hébergé sur un serveur correspondant à ce nom de domaine.

Le système de noms de domaine associe le nom de domaine « www. monserveur.fr » à une adresse IP qui correspond à un serveur donné.

Cette indirection permet de rendre les adresses publiques utilisables (noms de domaines) indépendantes de l'infrastructure réseau. Il est ainsi possible de déplacer l'application web d'une machine à une autre, sans pour autant que son « adresse publique » change.

Les identifiants des applications web peuvent par exemple être des URL pour « Unified Resource Locator » en anglais.

La base de données d'applications contient un ensemble d'identifiant d'applications web susceptibles d'être utilisés par un terminal. Selon ce mode de réalisation, l'étape de détection S1 comprend l'identification d'un sous-ensemble de ces applications qui sont effectivement utilisés par le terminal T.

Cette base de données d'applications peut être remplie de différentes façons.

Dans un mode de réalisation, la passerelle et les applications web sont gérés par un même opérateur. Par exemple, la société Orange peut fournir une passerelle Livebox^{™} et des applications web pour l'accès à des bouquets de chaînes de contenu. D'autres opérateurs suivent ce même modèle d'affaires.

Dans une telle situation, la passerelle P peut être aisément configurée par l'opérateur lui-même avec les identifiants des applications web qu'il met à disposition des terminaux.

Il peut également être envisagé un serveur public dans lequel les différents opérateurs et fournisseurs d'applications web viendraient fournir les identifiants de leurs applications web (par exemple sous la forme d'une adresse de type URL). Les passerelles P seraient alors adaptées pour télécharger cette base afin de connaître l'ensemble des applications web susceptibles d'être installées par un terminal.

La passerelle P peut alors analyser les requêtes précédentes en consultant un historique, ou journal, mémorisé en mémoire de la passerelle, de type « Log ».

Selon un autre mode de réalisation, l'étape de détection S1 peut ne pas se baser sur une base de données d'applications web susceptibles d'être utilisées, mais directement par la fourniture des applications installées sur le terminal. Il n'est alors pas besoin d'analyser les requêtes précédentes.

Par exemple une interface peut être proposée afin de permettre aux utilisateurs de fournir des identifiants des applications web qu'il utilise afin que ces identifiants soient mémorisés au sein de la passerelle P.

Également des mécanismes de découverte automatique peuvent être mis en place, par exemple au moyen d'une application dédiée installée sur le terminal et prévue pour analyser la configuration du terminal et fournir une liste d'applications web configurées sur l'interface du terminal, à la passerelle P.

Un tel mécanisme de découverte automatique peut se baser sur le protocole SSDP (acronyme de « Simple Service Discovery Protocol » en anglais) développé par le forum UPnP (pour « Universal Plug and Play ») prévu pour permettre aux terminaux en réseau de communiquer et de se découvrir mutuellement.

Les requêtes précédentes du terminal vers le système de noms de domaine, DNS, peuvent être analysées afin de vérifier si elles concernent un identifiant d'une application web contenu dans une base de données d'applications DB. Cette base de données est contenue dans la passerelle P ou bien externe et fonctionnellement connectée à celle-ci.

Si une requête concerne un identifiant d'une application web mémorisée dans la base DB, alors on peut en déduire qu'un appel à l'application web est configuré, ou présent, sur le terminal T. Le serveur web distant, qui héberge l'application web, est également directement déduit : son URL est déduite du contenu de la base de données d'applications et son adresse IP est déduite de la réponse du système de noms de domaine.

Si la passerelle P détecte la présence d'un appel à une application web A, alors, une étape S2 prévoit la détermination d'une période temporelle correspondant à un trafic bas associé au serveur distant S hébergeant cette application web A.

Selon un mode de réalisation, ce trafic correspond à une charge dudit serveur web distant. On peut en effet considérer que la charge du serveur est directement impactée par le trafic généré par les différents terminaux lui adressant des requêtes. La charge du serveur est un indicateur de sa capacité à pouvoir répondre rapidement à chaque requête et impacte donc directement sur la qualité de service (QoS pour « *Quality of Service* » en anglais) qu'il procure, et donc sur la vitesse d'exécution des applications web et la latence impliquées par ces exécutions.

Cette charge peut être une charge estimée. Cette charge estimée peut être déterminée par la passerelle sans nécessité d'interrogation du serveur web distant (une telle interrogation participerait à la charge du serveur et nuirait à la latence de l'exécution de l'application web).

Cette charge estimée peut être déterminée de façon statistique.

Par exemple, il peut être établi qu'au cours d'une journée, statistiquement, la charge est faible sur certains créneaux horaires (la nuit par exemple) et élevée sur certains autres créneaux horaires. Une telle statistique peut correspondre à une moyenne des rythmes de vie des utilisateurs des applications web concernées.

On peut ainsi déterminer une période temporelle correspondant à un trafic bas pour le serveur web distant, le terme « bas » faisant référence à une valeur relative inférieure par rapport aux valeurs prises au cours d'un cycle, par exemple quotidien.

Dans une étape S3, au moins une partie de l'ensemble des ressources associées à l'application web est téléchargée pendant une telle période temporelle. Dans un cas particulier, la totalité des ressources peut être téléchargé.

Si la détermination de la période temporelle est effectuée selon une règle commune à un ensemble de passerelles, alors celles-ci peuvent toutes déclencher les téléchargements en même temps. Dans la mesure où cette période correspond à une période de non-utilisation de l'application web, les latences qui peuvent ainsi être engendrées ne posent pas de problèmes particuliers.

Il peut également être prévu d'introduire un élément aléatoire afin que chaque passerelle déclenche le téléchargement à un instant distinct au sein de la période temporelle, afin d'éviter ces engorgements du serveur web distant S.

Ainsi qu'illustré dans l'exemple de la figure 3, le téléchargement peut être déclenché par une requête m1 transmis par la passerelle vers le serveur web distant A, associé à l'application web A.

En réponse, le serveur web distant S transmet la partie (qui peut être l'entièreté dans un cas particulier) de l'ensemble des ressources associées à l'application web A, dans un ou plusieurs messages m2.

Selon un mode de réalisation (illustré par cette figure 3), la partie téléchargée est mémorisée sur un serveur web interne, ou local, SL, associé à la passerelle P. Les ressources téléchargées peuvent conserver un identifiant similaire à celui sur le serveur web distant S.

Selon un mode de réalisation, la partie téléchargée constitue l'entièreté des ressources associées à l'application web A.

Selon un autre mode de réalisation, la partie téléchargée constitue un sous-ensemble propre de l'ensemble des ressources associées à l'application web A.

En particulier, cette partie peut correspondre aux ressources statiques associées à l'application web. Ces ressources statiques sont celles qui sont peu susceptible d'être modifiées à court terme. Le « court terme » peut correspondre à la périodicité des téléchargements des ressources. Par exemple, s'il est prévu que la passerelle télécharge les ressources chaque jour (dans une période temporelle déterminée en étape S2), alors si une ressource est peu susceptible d'être modifiée au cours de la journée, elle peut être considérée comme une ressource statique. Des exemples de ressources statiques peuvent être les logos, des images illustratives, des codes en javascript, les codes de mise en forme de type CSS (pour « *Cascading Style Sheet* » en anglais), etc.

Selon un mode de réalisation, la récupération peut être effectuée ressource par ressource. Par exemple, la passerelle transmet une requête m1 pour chaque ressource et le serveur transmet en réponse ladite ressource en autant de message m2.

Selon un autre mode de réalisation, les ressources sont transmises, par exemple sous une forme compressée, en un unique fichier. Ce fichier, ou archive, peut être construit par le serveur web distant et mis à disposition des passerelles. Une unique requête m1 vers ce fichier permet de déclencher sa récupération au moyen d'un unique message m2.

Ce mode de réalisation semble plus intéressant car il implique moins de requête sur le réseau et permet en outre, lors de la construction du fichier, de spécifier quelles sont ressources qui sont considérées comme statiques.

Le format de la requête m1 peut être celui d'une requête Web Classique. Il peut donc s'agir, par exemple, d'une requête « GET » du protocole HTTP destiné à la ressource souhaitée. Cette ressource est identifiée par une adresse comprenant un nom de domaine (correspondant au serveur web distant) et un nom de ressource. Ce nom de ressource peut comprendre le nom de l'application web A, selon différents détails d'implémentation accessibles à l'homme du métier.

Par exemple, une ressource image peut avoir comme adresse :
www.monserveur.fr/monapplication/ressource.jpeg

Dans le cas d'un fichier regroupant un ensemble de ressource, l'adresse peut être du type
www.monserveur.fr/monapplication/archive.tgz
ou encore
www.monserveur.fr/archive.tgz

« tgz » est ici un exemple d'extension de fichier compressé (fichier archive créé avec tar et ensuite compressé avec gzip, en général sur un système d'exploitation de type Unix).

Selon des modes de réalisation, une étape S4 d'interception d'une requête m6 est mise en oeuvre. Cette étape S4 peut se dérouler lorsque lors de l'allumage ou de l'activation d'un terminal T ou bien dans toute autre situation déclenchant un accès à l'application web A. Cette étape S4 est susceptible d'être déclenchée de façon concurrente sur de nombreuses passerelles P. Il s'agit donc d'un moment de trafic potentiellement important pour le serveur web distant S, mais fortement limité par le procédé exposé.

D'autres mécanismes encore peuvent être déployé pour utiliser le mécanisme de téléchargement anticipé précédemment décrit.

Dans cette étape S4, la passerelle P reçoit et intercepte une requête m6 du terminal T vers une ressource parmi la partie de l'ensemble de ressources qui a été précédemment téléchargée, et transmet, via un ou plusieurs messages m8 la ressource correspondant à la requête (et qui a été précédemment téléchargée) vers le terminal, sans solliciter le serveur web distant S.

Dans un mode de réalisation (illustré par la figure 3), la passerelle P transmet en fait la requête vers le serveur web interne (ou local) SL, message m7, et c'est celui-ci qui transmet la ou les ressources vers le terminal T, conformément au protocole HTTP.

Lorsque la partie téléchargée des ressources forme un sous-ensemble propre (ou strict) de l'ensemble des ressources, la passerelle P peut recevoir des messages m3 et les transmettre, de façon conventionnelle, vers le serveur web distant S, message m4, lorsqu'ils concernent des ressources non téléchargées (c'est-à-dire appartenant à l'ensemble complémentaire de la partie téléchargée). Auquel cas, le serveur web distant S transmet les ressources demandées, en un ou plusieurs messages m5, vers le terminal T, conformément au protocole HTTP.

Typiquement, une première requête m3 porte sur une ressource qui elle-même peut référencer d'autres ressources. Un échange entre un terminal et un serveur web comprend donc, en général, un ensemble de requêtes et réponses (qui normalement contiennent la ressource demandée correspondant à une requête).

Par exemple, une première requête m3 peut porter sur une ressource « index.html ».

Le fichier html (pour « HyperText Markup Language », en anglais) contient des références vers d'autres ressources : scripts Java (« framework.js », « polyfill.js », « main.js »), feuilles de style au format CSS (« style.css »), données au format JSON (pour « JavaScript Object Notation » en anglais, « config.json », images (« desk.jpeg », « play.png », « ads.jpg »).

A réception du fichier principal « index.html », le terminal T parse son contenu pour déterminer les ressources référencées et, s'il ne les a pas déjà dans sa propre mémoire cache, transmet de nouvelles requêtes m3, m6 vers la passerelle. Ces ressources référencées peuvent elles-mêmes contenir d'autres références vers des ressources qui, à leur tour, suivront le même processus pour être télécharger.

La passerelle P peut déterminer si la ressource demandée correspond à une ressource dont elle dispose (c'est-à-dire qu'elle a précédemment téléchargé à l'étape S3) ou pas.

La figure 4 illustre un cas concret, mais simplifié, de récupération des ressources par le terminal T à la fois auprès de la passerelle P et du serveur web distant S. Dans cette illustration, uniquement les téléchargements sont représentés mais chaque téléchargement est déclenché par une requête de la part du terminal T.

Sur cet exemple, on remarque qu'une partie substantielle des ressources associées à l'application A sont téléchargées depuis la passerelle P, et non pas depuis le serveur distant P. Celui-ci se trouve ainsi soulagé d'une charge importante.

D'une façon générale, le procédé permet d'éviter les téléchargements concurrents d'un trop grand nombre de ressources de la part d'une pluralité de terminaux. On évite ainsi de trop charger les serveurs web hébergeant les applications web. Pour les terminaux, on obtient une meilleure qualité de service lors de l'exécution des applications web, notamment matérialisée par une meilleure latence et une plus grande rapidité d'exécution. La sollicitation des serveurs web est également mieux répartie, y compris dans les périodes de sous-utilisation. On peut ainsi dimensionner ces serveurs web de façon optimale, de façon respectueuse d'une bonne gestion énergétique.

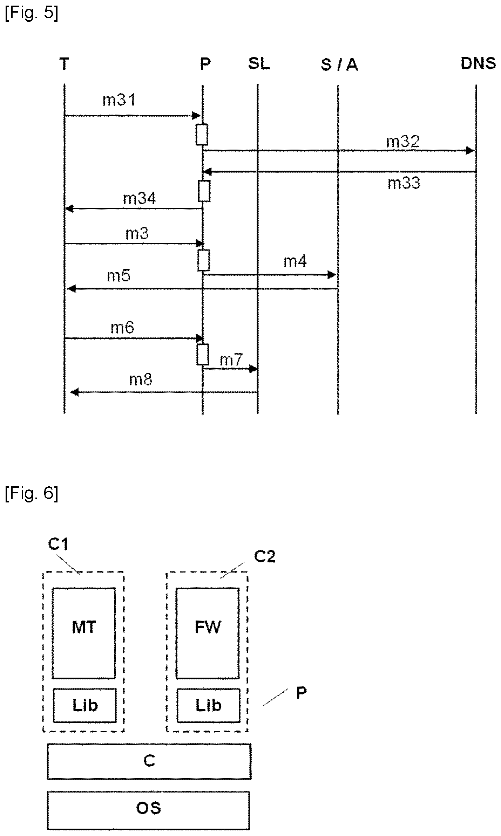

La figure 5 représente un chronogramme illustrant un mode de réalisation particulier de l'étape S3 du procédé proposé, basé sur une interaction avec un serveur de noms de domaine, DNS (pour « Domain Name Server » en anglais).

Le terminal T connaît une adresse logique du serveur web distant S, hébergeant l'application web A, mais non pas son adresse physique. Afin de pouvoir requérir une ressource, il doit donc interroger un serveur de noms de domaine DNS, message m31.

La passerelle redirige cette requête vers un serveur DNS, puis transmet sa réponse m33 vers le terminal T, message m34. Ce message est classique en soi, mais en outre il permet ici à la passerelle d'apprendre une association entre l'adresse logique et l'adresse physique du serveur web distant.

La passerelle peut ainsi déterminer l'identifiant d'une ressource à partir d'une requête contenant son adresse physique. Ainsi, à partir d'une adresse physique (adresse IP), elle peut déterminer un identifiant basé sur l'identification de l'application web A.

En particulier, dans un mode de réalisation, l'interception S4 comprend une analyse d'une première requête m31 du terminal T destiné au système de noms de domaine, pour déterminer si cette première requête correspond à l'application web A et, en ce cas, une mémorisation d'une adresse IP correspondant à cette première requête (c'est-à-dire, en général, l'adresse du champ « destination » du message m31). Ensuite, la détection des requêtes m6 dudit terminal vers ladite ressource à intercepter est effectuée à partir de l'adresse IP.

En reprenant l'exemple cité précédemment, un tel identifiant de ressource peut prendre la forme : www.monserveur.fr/monapplication/ressource.jpeg (dans le cas d'une ressource image au format JPEG).

Ainsi, à réception d'une requête m3, adressée à l'adresse physique du serveur web A, la passerelle A est à même de déterminer l'identifiant de la ressource requise et ici, qu'elle ne dispose pas de cette ressource. La requête est retransmise, m4, vers le serveur distant S, déclenchant ainsi son téléchargement m5.

A la réception de la requête m6, la passerelle peut déterminer l'identifiant de la ressource requise et qu'elle dispose de cette ressource (précédemment téléchargée). Elle transmet la requête, m7, vers le serveur web local qui peut ainsi transmettre la ressource (précédemment téléchargée), m8, vers le terminal T. Dans ce cas, le serveur web distant n'est pas sollicité.

La figure 6 illustre une architecture logicielle fonctionnelle d'une passerelle P selon un mode de réalisation particulier mettant en oeuvre un conteneur applicatif.

Contrairement aux machines virtuelles, les conteneurs n'émulent pas le matériel, mais le système d'exploitation. Plusieurs conteneurs isolés peuvent être exploités au sein d'une installation de système d'exploitation.

Ainsi qu'illustré sur la figure 6, un moteur de conteneur C peut être déployé au-dessus du système d'exploitation, OS, mis en oeuvre par les moyens de traitement TRT de la plateforme P.

Plusieurs conteneurs C1, C2 peuvent être ainsi être déployés au-dessus du moteur de conteneurs C.

Chaque conteneur peut contenir une librairie Lib permettant d'accéder aux fonctionnalités du moteur de conteneurs et d'assurer l'interface entre l'application MT, FW de sorte que l'architecture logicielle basée sur des conteneurs soit transparente pour elle.

L'application FW est par exemple le pare-feu (ou « Firewall ») embarqué classiquement sur la passerelle P.

L'application MT représente les moyens logiciels adaptés à la mise en oeuvre du procédé décrit (c'est-à-dire, schématiquement, les moyens logiciels des moyens de traitement TRT, précédemment évoqués).

L'utilisation de conteneurs apporte beaucoup de souplesse comme :
l'étanchéité des applications entre elles, la possibilité d'ajouter facilement un nouveau service de cache d'application Web, le contrôle des ressources utilisées par les conteneurs, ...

Selon un mode de réalisation, des machines virtuelles peuvent être utilisées à la place des conteneurs.

Bien entendu, la présente invention n'est pas limitée aux exemples et au mode de réalisation décrits et représentés, mais est défini par les revendications. Elle est notamment susceptible de nombreuses variantes accessibles à l'homme de l'art. 1

## Revendications

1. Procédé pour l'exécution par un terminal (T) d'une application web (A) dont un ensemble de ressources associées est mémorisé sur un serveur web distant (S), ledit procédé comportant des étapes de :
- détection (S1) par une passerelle (P) d'une présence au sein dudit terminal d'un appel à ladite application web et identification dudit serveur web distant ;
- détermination (S2) d'une période temporelle correspondant à un trafic bas associé audit serveur web distant ; et,
- téléchargement (S3) d'au moins une partie dudit ensemble de ressources pendant ladite période par ladite passerelle.

2. Procédé selon la revendication précédente comportant en outre une étape d'interception (S4) par ladite passerelle d'une requête (m6) dudit terminal vers une ressource parmi ladite au moins une partie dudit ensemble de ressources, et transmission (m8) de ladite ressource correspondant à ladite requête vers ledit terminal.

3. Procédé selon la revendication précédente, dans lequel ladite interception fonctionne en collaboration avec un containeur applicatif (C1) déployé sur ladite passerelle (P) afin d'isoler le traitement (T) desdites étapes au sein de ladite passerelle.

4. Procédé selon l'une des revendications précédentes, dans lequel ladite au moins une partie dudit ensemble de ressources est mémorisée sur un serveur web interne (SL) de ladite passerelle.

5. Procédé selon l'une des revendications précédentes, dans lequel ladite au moins une partie dudit ensemble de ressources est constituées de ressources statiques.

6. Procédé selon l'une des revendications précédentes, dans lequel ledit trafic correspond à une charge dudit serveur web distant.

7. Procédé selon l'une des revendications précédentes dans lequel ladite détection (S1) comprend une analyse de requêtes précédentes dudit terminal vers un système de noms de domaine en fonction d'une base de données d'applications (DB)

8. Procédé selon les revendications 2 et 7, dans lequel ladite interception (S4) comprend une analyse d'une première requête dudit terminal destiné audit système de noms de domaine, pour déterminer si ladite première requête correspond à ladite application web (A) et, en ce cas, une mémorisation d'une adresse IP correspondant à ladite première requête, et détection de ladite requête dudit terminal vers ladite ressource à partir de ladite adresse IP.

9. Passerelle pour l'exécution par un terminal (T) d'une application web (A) dont un ensemble de ressources associés est mémorisé sur un serveur web distant (S), ladite passerelle comportant des moyens de traitement (TRT) adaptés pour :
- détecter une présence au sein dudit terminal d'un appel à ladite application web et pour identifier ledit serveur web distant ;
- déterminer une période temporelle correspondant à un trafic bas associé audit serveur web distant ;
- télécharger au moins une partie dudit ensemble de ressources pendant ladite période par ladite passerelle ;

10. Passerelle selon la revendication précédente, dans laquelle lesdits moyens de traitement (TRT) sont en outre adaptés pour intercepter une requête (m6) dudit terminal vers une ressource parmi ladite au moins une partie dudit ensemble de ressources, et transmettre (m8) ladite ressource correspondant à ladite requête vers ledit terminal.

11. Programme d'ordinateur apte à être mis en oeuvre sur une passerelle, le programme comprenant des instructions de code qui, lorsqu'il est exécuté par un processeur, réalise les étapes du procédé définie dans les revendications 1 à 8.

12. Support de données sur lequel a été mémorisé au moins une série d'instructions de code de programme pour l'exécution d'un procédé selon l'une des revendications 1 à 8. 1
